# FASCICULE DE BREVET EUROPEEN

(11) **EP 2 510 676 B1**
(45) Date de publication et mention de la délivrance du brevet: **14.11.2018**
(21) Numéro de dépôt: 10799075.6
(22) Date de dépôt: 07.12.2010
(51) Int. Cl.: H04M 3/436

(54) **PROCÉDÉ ET SYSTÈME DE PERSONNALISATION DE MESSAGES D'INDISPONIBILITÉ**
VERFAHREN UND SYSTEM ZUR PERSONALISIERUNG VON NICHTVERFÜGBARKEITSNACHRICHTEN
METHOD AND SYSTEM FOR PERSONALIZING UNAVAILABILITY MESSAGES

(30) Priorité: 07.12.2009 FR 0958722
(43) Date de publication de la demande: 17.10.2012
(73) Titulaire: Orange, 75015 Paris (FR)
(72) Inventeur: CORBETT, Giles, Londres W4 2HQ (GB); BEARDOW, Paul, Easton SO21 1EN (GB); PABOT, Romain, F-75003 Paris (FR); BOURGANEL, Remy, F-75013 Paris (FR); DESCOGNETS, Paula, F-92410 Ville D'avray (FR); ULRICH, Ghislain, F-75017 Paris (FR)
(74) Mandataire: Regimbeau
(86) Numéro de dépôt international: PCT/FR2010/000815
(87) Numéro de publication internationale: WO 2011/070247

(56) Documents cités:
- EP-A1- 1 672 896
- US-A1- 2003 134 626
- US-A1- 2004 052 356
- US-A1- 2008 084 974
- US-A1- 2008 159 489
- JONATHAN EYAL GARDI: "Busy or unreachable mobile phone availability via SMS", IP.COM JOURNAL, IP.COM INC., WEST HENRIETTA, NY, US, 23 juillet 2003 (2003-07-23), XP013011612, ISSN: 1533-0001

## Description

La présente invention concerne la génération de messages d'indisponibilité, voire d'absence, et notamment un procédé et un système de personnalisation de tels messages.

Les messages d'absence sont largement répandus dans les réseaux de communication pour informer une partie appelante de l'indisponibilité du destinataire d'un appel visant l'établissement d'une communication.

On retrouve ces messages d'absence dans les réseaux de téléphonie, notamment de téléphonie mobile, au travers des messageries vocales. Un message d'indisponibilité est délivré à un interlocuteur appelant dès lors que son appel vers un interlocuteur destinataire ne peut aboutir en raison d'une indisponibilité du destinataire.

L'absence d'aboutissement d'un tel appel se produit généralement lorsque le destinataire de l'appel ne répond pas à celui-ci dans un temps donné ou simplement lorsque son téléphone mobile est éteint ou hors zone de couverture. Dans ce cas, un serveur de messagerie vocale diffuse un message d'absence préétabli auprès de l'abonné appelant de l'appel, message également nommé indifféremment "message d'indisponibilité" dans le cadre de l'invention, donnant l'opportunité à l'appelant de laisser, à son tour, un message.

On retrouve également ces messages d'indisponibilité dans d'autres réseaux de communication. Par exemple, une boîte de messagerie électronique, également nommé "*boîte email*", peut être configurée avec un message d'absence lorsque le titulaire de ce compte email se déclare indisponible. Ainsi, lorsqu'un courriel d'un émetteur ne peut être reçu par son destinataire en raison de son indisponibilité, le serveur email réceptionnant ce courriel renvoie automatiquement un message d'absence renseigné lors de la configuration de l'indisponibilité.

On peut aussi citer les messages d'indisponibilité dans les services de messagerie instantanée.

Ainsi, de façon générale, lorsqu'un utilisateur appelé est indisponible pour un utilisateur appelant, ce dernier se voit diffuser un message d'absence/ d'indisponibilité préenregistré par l'utilisateur appelé.

Dans la suite de la description, on s'intéressera aux messageries vocales d'un réseau de téléphonie mobile, diffusant des messages d'accueil. Toutefois, comme il a été montré ci-dessus, les messages d'indisponibilité, et la présente invention, s'appliquent à de nombreux réseaux de communication.

Les messages d'accueil des messageries vocales sont généralement enregistrés au préalable par l'abonné concerné, à l'aide de son propre téléphone et en contactant le serveur de messagerie vocale de son opérateur.

A un instant donné, un seul message d'accueil est disponible de telle sorte que tous les abonnés appelants qui sont basculés automatiquement sur la messagerie vocale entendent le même message. Pour satisfaire à tout type d'appelant, l'abonné appelé doit donc avoir prévu un message vocal simple, neutre et général, par exemple un texte court indiquant que l'abonné n'est pas disponible et invitant l'appelant à laisser un message.

Pourtant, les communications, dès lors qu'elles sont établies, sont très personnalisées entre l'appelant et l'appelé. Pour faire perdurer cette relation appelant/appelé même en cas d'indisponibilité de l'abonné appelé, il existe un besoin de personnaliser les messages d'accueil, ou plus généralement les messages d'indisponibilité, pour les adapter à l'appelant auxquels ils sont plus spécifiquement destinés.

Par ailleurs, les raisons de l'indisponibilité d'un abonné peuvent varier dans le temps: réunion, vacances, déplacement professionnel, hospitalisation, etc. Traditionnellement, il est nécessaire que l'abonné réenregistre un nouveau message d'accueil pour chaque nouvelle raison d'indisponibilité, par exemple au début des vacances puis à la fin de celles-ci. Cette procédure de changement du message d'accueil est quelque peu rébarbative, consommatrice de temps et susceptible d'être oubliée alors que l'abonné peut se retrouver dans l'impossibilité d'accéder à sa messagerie vocale pour la configurer (vacances à l'étranger par exemple). De plus, la délivrance d'un nouveau message peut s'avérer parfaitement inadaptée à certaines catégories d'appelants.

Il est existe donc également un besoin de simplifier la gestion des messages d'indisponibilité pour les abonnés.

Des solutions ont pu être cependant proposées. Dans ce sens, certaines solutions de l'art antérieur proposent à des abonnés utilisateurs d'enregistrer une pluralité de messages vocaux auprès de leur compte de messagerie vocale. Mais bien que l'abonné n'ait plus à enregistrer un message à chaque nouvelle raison d'indisponibilité, ces messages restent simples, neutres et généraux car dédiés à l'ensemble des appelants.

On connaît également, de la publication EP 1 672 896, un système de personnalisation de messages lorsqu'un utilisateur appelé n'est pas disponible. Une priorité affectée à l'utilisateur appelant par l'utilisateur appelé permet d'utiliser plus ou moins d'informations renseignées au niveau d'un serveur de présence pour le message qui sera produit,

Toutefois, cette gestion n'est pas optimale. D'une part, la mise en oeuvre de priorités est un surcoût pour l'utilisateur appelé qui doit les définir à l'avance et les maintenir à jour en fonction de ses souhaits. D'autre part, ce système ne permet pas à l'utilisateur appelé de prévoir une stratégie discriminante d'indisponibilité en fonction des utilisateurs appelants. Une telle stratégie accroît en effet la liberté de l'utilisateur appelé.

On connaît encore des procédés de personnalisation de messages d'indisponibilité décrits dans les documents US2008/159489, US2004/052356, ou US2003/134626.

La présente invention vise à améliorer les solutions connues de gestion de messages d'absence dans les réseaux de communication en proposant une personnalisation des messages d'indisponibilité d'un utilisateur appelé destinés à être délivrés aux interlocuteurs appelants lorsque la communication avec l'interlocuteur appelé ne peut aboutir.

L'indisponibilité d'un utilisateur appelé résulte d'une configuration indiquée dans un profil/groupe de contacts de l'utilisateur.

Selon l'invention, on tient compte d'un statut d'indisponibilité qui est renseigné au niveau du groupe de contacts auquel l'appelant appartient, afin de déterminer la disponibilité de l'utilisateur appelé. Cela permet à ce dernier d'ajuster, de façon discriminée en fonction de ses contacts, sa propre disponibilité.

En outre, l'utilisation du carnet d'adresses pour mettre en oeuvre cette stratégie assure une gestion simple, car très lisible pour l'utilisateur.

Par ailleurs, selon l'invention, le message d'indisponibilité proposé à l'utilisateur appelant est personnalisé, par au moins une information renseignée dans le carnet d'adresses, en fonction de son appartenance à au moins un groupe de contacts auquel l'utilisateur appelé l'aura rattaché.

De la sorte, le message d'indisponibilité est personnalisé en fonction de la relation existant entre les deux utilisateurs, cette relation résultant notamment de l'organisation du carnet d'adresses de l'utilisateur appelé en différents groupes de contacts qu'il aura préalablement définis.

L'invention permet ainsi à un utilisateur de proposer, au même instant, des messages d'indisponibilité différents et personnalisés, spécifiques de chacun de ses groupes de contacts.

En outre, grâce à ces messages personnalisés, l'appelant peut obtenir davantage d'informations significatives sur l'indisponibilité de l'utilisateur (par exemple les raisons de cette indisponibilité ou le moment pour réessayer de le joindre à nouveau), contrairement aux techniques classiques où un seul message simple, neutre et général est disponible à un instant donné pour l'ensemble des appelants.

Par ailleurs, l'utilisation d'informations associées à chaque groupe de contacts permet de réduire l'intervention de l'utilisateur dans la génération de nombreux messages d'absence, comme cela est illustré par la suite.

Dans un mode de réalisation de l'invention, ledit message généré est un message vocal et l'étape de génération comprend une étape de création d'un message texte à partir de ladite au moins une première information et une étape de synthèse vocale dudit message texte en un message vocal. L'invention permet ainsi de générer un grand nombre de messages vocaux d'absence personnalisés sans solliciter l'utilisateur pour procéder à autant d'enregistrements. On dispose ainsi d'une messagerie vocale qui peut suivre dynamiquement l'évolution de la disponibilité de l'utilisateur indiquée au niveau de l'information de disponibilité et qui est plus personnalisée en fonction des abonnés appelants.

Comme on le verra par la suite, la seule intervention de l'utilisateur se résume alors à renseigner le plus souvent possible des informations de disponibilité ou autres sur ses groupes de contacts personnels. Une telle action de renseignement est rapide et habituelle pour bon nombre d'utilisateurs, notamment de réseaux sociaux ou de services de messagerie instantanée.

On note que cette configuration correspond au cas où la mise à disposition comprend l'accès, par ledit utilisateur appelant, à une messagerie vocale de l'utilisateur dans un réseau de téléphonie, la messagerie vocale lisant ledit message vocal.

On notera également que l'invention n'est pas limitée à des messages vocaux, comme illustré précédemment avec des messages électroniques (email) ou des messages de messagerie instantanée. Dans une variante ou en complément (confirmation écrite par exemple), on peut également prévoir que le message d'absence généré est un message texte du type SMS ou de messagerie instantanée, transmis à l'utilisateur appelant.

Selon une caractéristique particulière relative à la synthèse vocale, le procédé comprend une étape de vérification du message texte par comparaison avec un message texte créé au préalable pour ledit au moins un groupe déterminé, et ladite synthèse vocale a lieu uniquement si le message texte a été modifié. Bien entendu, cette comparaison peut être plus poussée en comparant les messages texte pour un même groupe de contacts et un même contact appelant, dans le cas notamment où le nom du contact appelant est intégré au message d'indisponibilité. En variante, la comparaison peut être effectuée, non plus sur le seul message texte, mais sur l'ensemble des informations qui sont intégrées au message d'indisponibilité: information de disponibilité, éventuellement nom du contact appelant, et autres informations telles que décrites par la suite, ce qui permet éventuellement de bloquer la création d'un nouveau texte.

Dans cette configuration, on réduit la charge de traitement du serveur de synthèse vocale, ce qui peut s'avérer très avantageux au vu du grand nombre de nouveaux messages pouvant être créés simultanément pour une pluralité d'utilisateurs appelés. On évite ainsi de générer deux fois de suite le même message vocal.

Dans un mode de réalisation de l'invention, on associe, à un groupe de contacts personnels, une information de géolocalisation propre dudit utilisateur appelé, et ledit message d'indisponibilité est généré en tenant compte de ladite information de géolocalisation. En incluant cette information de géolocalisation dans le message d'indisponibilité, on augmente le niveau d'information auquel accède l'utilisateur appelant.

Notamment, le procédé comprend une étape de détermination et de mise à jour automatique de l'information de géolocalisation propre dudit utilisateur appelé, par exemple à l'aide de techniques classiques de géolocalisation pour téléphones mobiles ou autres équipements (triangulation, GPS). Cela permet de réduire de façon efficace l'intervention de l'utilisateur pour augmenter la précision des informations contenues dans les messages d'indisponibilité.

En particulier, on peut alors prévoir que, pour un groupe de contacts donné, ladite première information est choisie parmi un ensemble restreint d'entrées, ces entrées étant fonction de ladite information de géolocalisation déterminée pour ledit groupe de contacts. Egalement, ladite première information tient compte d'au moins une information représentative d'un statut de disponibilité dudit utilisateur appelé, ledit statut étant mis à jour automatiquement en fonction de ladite information de géolocalisation déterminée. On réduit encore ici l'intervention de l'utilisateur dans la mise à jour de ses groupes de contacts et donc dans la génération de nouveaux messages personnalisés d'indisponibilité adaptés à ces évolutions.

Ledit message d'indisponibilité tient compte d'une information de nommage propre de l'utilisateur appelé, renseignée en association avec ledit groupe de contacts personnels déterminé. Généralement, il s'agit du nom de l'utilisateur sous lequel il souhaite se faire connaître par ses différents contacts de son carnet d'adresses. De façon symétrique, ledit message d'indisponibilité tient compte d'une information de nommage propre de l'utilisateur appelant, renseignée, dans le carnet d'adresses dudit utilisateur appelé, en association avec un contact correspondant à l'utilisateur appelant. Il s'agit ici du nom par lequel l'utilisateur appelé nomme l'appelant dans son carnet d'adresses. Ainsi la possibilité de personnalisation des messages est encore plus forte.

Selon une caractéristique de l'invention, le procédé comprend une étape de détermination d'un niveau de disponibilité de l'utilisateur appelé en fonction de l'au moins une information de disponibilité associée audit groupe de contacts déterminé. Cette disposition permet notamment une détermination automatique de l'indisponibilité de l'utilisateur appelé, ce qui entraîne la production et l'accès automatique au message d'absence par l'utilisateur appelant. Par ailleurs, elle permet à l'utilisateur appelé de contrôler sélectivement le rejet d'appels pour certains groupes de contacts, en jouant sur cette information.

Selon une caractéristique, ledit utilisateur appelant étant associé à au moins deux groupes de contacts distincts dans le carnet d'adresses dudit utilisateur appelé, ledit message d'indisponibilité tient compte d'une première information associée au groupe de contacts, parmi lesdits au moins deux groupes de contacts, disposant d'un statut de disponibilité le plus élevé. Cette disposition permet de favoriser l'établissement d'une communication avec l'utilisateur appelé car le statut de disponibilité le plus favorable est pris en compte. Cela résulte également, en cas d'indisponibilité, en un message d'indisponibilité qui est susceptible de contenir les informations les plus favorables pour permettre une communication ultérieure dans les meilleurs délais.

Selon un premier aspect, l'invention concerne un procédé de personnalisation d'un message d'indisponibilité d'un utilisateur appelé destiné à être délivré à un utilisateur appelant dans un réseau de communication, ledit utilisateur appelé disposant d'au moins un carnet d'adresses organisé selon au moins un groupe de contacts regroupant des contacts personnels, caractérisé en ce que le procédé comprend les étapes consistant à :
- déterminer au moins un groupe de contacts dudit utilisateur appelé comprenant un contact correspondant audit utilisateur appelant ;
- déterminer la disponibilité de l'utilisateur appelé à l'aide d'une information de disponibilité dudit utilisateur appelé associée à l'au moins un groupe de contacts déterminé ; et
- en cas de détermination d'une indisponibilité dudit utilisateur appelé :
   ∘ générer un message d'indisponibilité à partir d'au moins une première information associée, dans le carnet d'adresses, audit au moins un groupe de contacts déterminé ;
   ∘ mettre ledit message généré à disposition dudit utilisateur appelant.
   dans lequel ledit message d'indisponibilité tient compte d'une information de nommage propre de l'utilisateur appelant, renseignée, dans le carnet d'adresses dudit utilisateur appelé, en association avec un contact correspondant audit utilisateur appelant.

Selon des caractéristiques avantageuses et non-limitatives :
- ledit message généré est un message vocal et l'étape de génération comprend une étape de création d'un message texte à partir de ladite au moins une première information et une étape de synthèse vocale dudit message texte en un message vocal ;
- on associe à un groupe de contacts personnels, une information de géolocalisation propre dudit utilisateur appelé, et ledit message d'indisponibilité est généré à partir de ladite information de géolocalisation ;
- le procédé comprend une étape de détermination et de mise a jour automatique de ladite information de géolocalisation propre dudit utilisateur appelé ;
- pour un groupe de contacts personnels, ladite première information est choisie parmi un ensemble restreint d'entrées, ces entrées étant fonction de ladite information de géolocalisation déterminée pour ledit groupe de contacts personnels ;
- ladite première information tient compte d'au moins une information représentative d'un statut de disponibilité dudit utilisateur appelé, ledit statut étant mis à jour automatiquement en fonction de ladite information de géolocalisation déterminée ;
- ledit message d'indisponibilité tient compte d'une information de nommage propre de l'utilisateur appelé, renseignée en association avec ledit groupe de contacts personnels déterminé ;
- ledit utilisateur appelant étant associé à au moins deux groupes de contacts distincts dans le carnet d'adresses dudit utilisateur appelé, ledit message d'indisponibilité tient compte d'une première information associée au groupe de contacts, parmi lesdits au moins deux groupes de contacts, disposant d'un statut de disponibilité le plus élevé.

Selon un premier aspect, l'invention concerne un système de personnalisation d'un message d'indisponibilité d'un utilisateur appelé destiné à être délivré à un utilisateur appelant dans un réseau de communication, ledit utilisateur appelé disposant d'au moins un carnet d'adresses organisé selon au moins un groupe de contacts regroupant des contacts personnels, caractérisé en ce qu'il comprend :
- un moyen pour déterminer au moins un groupe de contacts dudit utilisateur appelé comprenant un contact correspondant audit utilisateur appelant ;
- un moyen pour déterminer la disponibilité de l'utilisateur appelé à l'aide d'une information de disponibilité dudit utilisateur appelé associée à l'au moins un groupe de contacts déterminé ;
- un moyen pour générer, en cas d'indisponibilité de l'utilisateur appelé, un message d'indisponibilité à partir d'au moins une première information associée, dans le carnet d'adresses, audit au moins un groupe de contact déterminé ; et
- un moyen de mise à disposition dudit message généré auprès dudit utilisateur appelant ;
dans lequel ledit message d'indisponibilité tient compte d'une information de nommage propre de l'utilisateur appelant, renseignée, dans le carnet d'adresses dudit utilisateur appelé, en association avec un contact correspondant audit utilisateur appelant.

Selon des caractéristiques avantageuses et non-limitatives :
- le moyen pour générer un message d'indisponibilité comprend un moyen de création d'un message texte sur la base de l'au moins une première information et un serveur de synthèse vocale dudit message texte en un message vocal ; et
- ledit moyen de mise à disposition est un serveur de messagerie vocale d'un réseau de téléphonie ;
- le système comprend une base de données stockant les carnets d'adresses de plusieurs utilisateurs et synchronisée avec des carnets d'adresses détenus localement par lesdits utilisateurs.

Selon un deuxième et un troisième aspect, l'invention concerne un moyen de stockage d'informations comprenant des instructions pour un programme informatique adapté à mettre en oeuvre le procédé de gestion selon le premier aspect lorsque ce programme est chargé et exécuté par le système informatique ; et un produit programme d'ordinateur lisible par un microprocesseur, comprenant des instructions pour la mise en oeuvre du procédé de gestion conforme au premier aspect, lorsque ce programme est chargé et exécuté par le microprocesseur.

D'autres particularités et avantages de l'invention apparaîtront dans la description ci-après, illustrée par les dessins ci-joints, dans lesquels :
- la **figure 1** représente un système de téléphone mobile pour la mise en oeuvre de l'invention;
- la **figure 2** représente un exemple de structure d'un carnet d'adresses d'un abonné pour la mise en oeuvre de la présente invention;
- la **figure 3** représente, sous forme d'ordinogramme, des étapes de génération d'un message d'accueil personnalisé pour une messagerie vocale dans le réseau de téléphone mobile de la **figure 1**;
- la **figure 4** illustre un exemple de message communiqué entre le serveur central de carnets d'adresses et le serveur de messagerie vocale de la **figure 1**; et
- la **figure 5** montre une configuration matérielle particulière d'un dispositif apte à une mise en oeuvre du procédé selon l'invention.

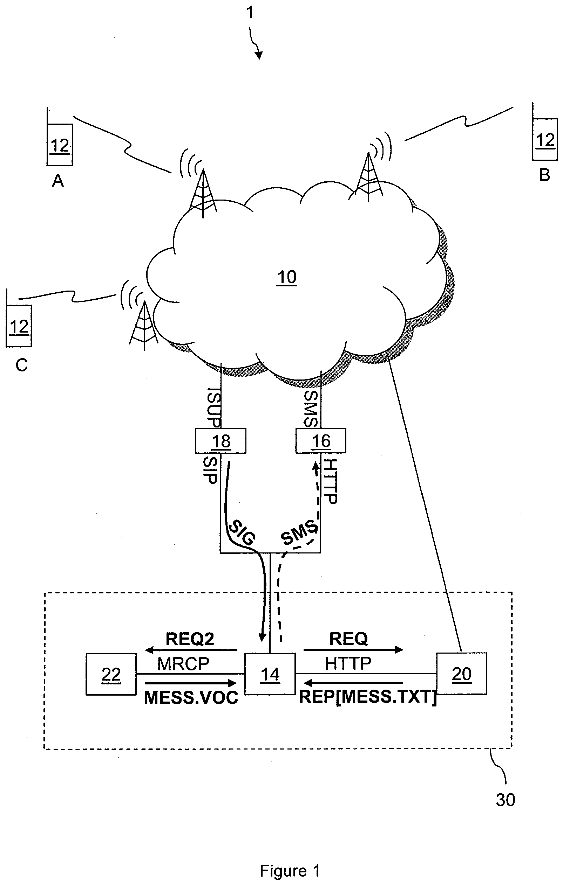

On a représenté, sur la **figure 1**, un exemple de système de téléphonie mobile 1 pour une mise en oeuvre de l'invention.

De façon connue en soi, un tel système de téléphonie mobile comprend un réseau de télécommunication mobile 10, une pluralité de terminaux 12 d'abonnés A, B, C, un serveur de messagerie vocale 14, un serveur SMS 16 et une passerelle ISUP/SIP 18 agencée pour convertir les messages de signalisation ISUP du réseau de téléphonie mobile 10 en messages de signalisation SIP à destination du serveur de messagerie vocale 14.

Chaque abonné A, B, C a enregistré, sur le serveur de messagerie vocale 14, un message d'accueil simple, neutre et général (appelé ci-après message d'accueil classique) de telle sorte qu'en l'absence de la présente invention, tous les autres abonnés qui n'arrivent pas à joindre un abonné basculent automatiquement sur le serveur de messagerie (également appelé "répondeur"), ce serveur leur diffusant ce message d'accueil les invitant à déposer un message sur la boîte vocale de l'abonné indisponible.

Chaque terminal 12 est doté d'un numéro d'appel, également connu sous la terminologie MSISDN ("*mobile station ISDN*" pour numéro RNIS de station mobile), par lequel les abonnés peuvent s'appeler. Ces mécanismes sont largement connus de l'homme de l'art et ne sont donc pas décrits plus en détail.

Chaque abonné A, B, C tient à jour, dans son terminal 12, un carnet d'adresses référençant, sous forme de contacts, un ensemble d'autres abonnés. La notion de carnet d'adresses est également largement connue de l'homme de l'art, par exemple au travers de la publication EP 1 330 752 montrant des contacts organisés en groupes et à chacun desquels est associé un statut de disponibilité du contact, par exemple via un élément graphique "visage souriant" ou une croix ou un champ explicite.

Le "statut de disponibilité" est un élément bien connu de l'homme de l'art dans les systèmes de communication à l'aide de contacts. Le "statut de disponibilité" est notamment une information caractérisant la disponibilité de l'abonné correspondant, au travers d'un nombre limité d'états possibles.

Comme introduite précédemment, la notion de disponibilité d'un utilisateur recouvre la disponibilité de cet utilisateur compte tenu de ses obligations, professionnelles et/ou personnelles, de critères relationnels que cet utilisateur manifeste ou souhaite établir, au niveau de son terminal, vis-à-vis de certains de ses interlocuteurs, habituels ou non, amenés à émettre et/ou recevoir des appels ou messages électroniques vers ou à partir des terminaux distants munis chacun d'une adresse électronique.

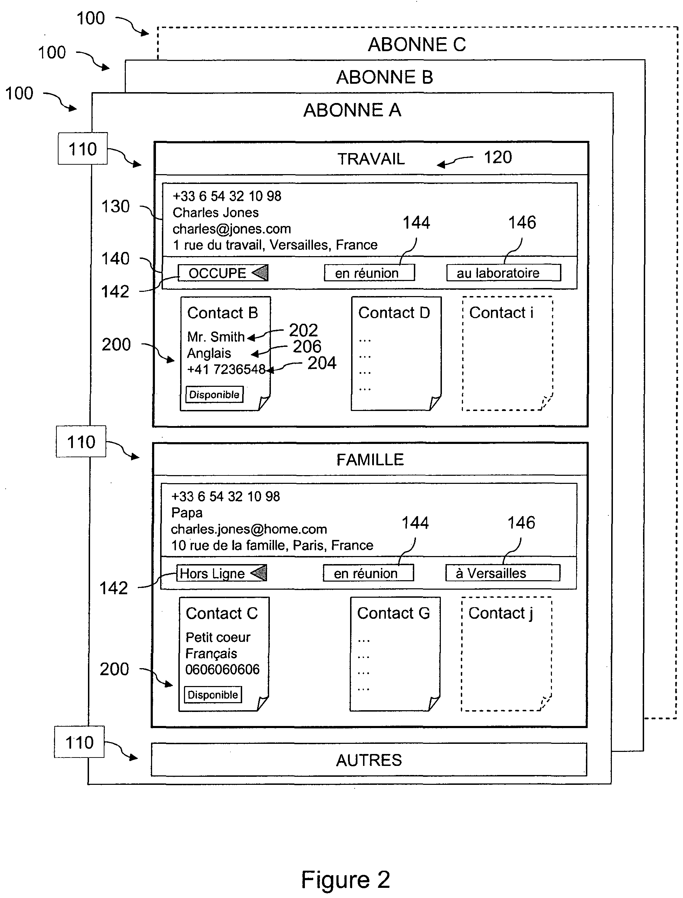

La **figure 2** montre un exemple de carnets d'adresses 100 pour les abonnés A, B et C, tous établis sur la même base. Ainsi, le carnet d'adresses de l'abonné A comprend plusieurs profils personnels ou groupes 110 comprenant, chacun, un ou plusieurs contacts 200 correspondant à d'autres abonnés B, C, D, G, I, J, etc.

Ces groupes 110 de contacts personnels sont autant de présentations différentes du même abonné A qui permettent à ce dernier de préciser les relations qu'il a avec les différents contacts. Chaque groupe 110 de contacts personnel est défini par un nom 120, des informations personnelles statiques 130 et des informations dynamiques 140.

Dans notre exemple, le nom 120 est, selon le groupe considéré, "TRAVAIL", "FAMILLE" ou "AUTRES". Les informations personnelles statiques sont par exemple le numéro de téléphone MSISDN, un nom "PAPA" ou "CHARLES JONES" par lequel l'abonné A souhaite être connu des contacts listés dans le groupe 110, une photographie ou image, des adresses électroniques (MSISDN, adresse email, etc.), une adresse postale, etc.

Les informations dynamiques comprennent des informations de disponibilité 142, 144 et une information de géolocalisation 146.

L'information de géolocalisation peut être précisée manuellement par l'abonné A via son terminal 12 ou être mise à jour automatiquement par des mécanismes de géolocalisation classique, par exemple GPS ou triangulation GSM. En particulier, l'information de géolocalisation est choisie parmi un ensemble prédéfini de possibilités pour chaque groupe 110 de contacts personnels, par exemple "au siège américain", "au laboratoire", "à l'usine", "à Paris", "à l'étranger" pour le groupe "TRAVAIL" et "à Versailles", "à la maison", "à la maison de campagne" pour le groupe "FAMILLE". Ainsi, lorsque l'abonné A rentre chez lui, ses groupes 110 peuvent être mis à jour automatiquement pour indiquer "à Paris" pour le groupe "TRAVAIL" et "à la maison" pour le groupe "FAMILLE".

Cette information de géolocalisation peut également prendre la forme d'une information de localisation physique telle qu'une adresse postale ou des coordonnées longitude/latitude.

Les informations de disponibilité comprennent un statut de disponibilité 142 qui peut prendre quatre valeurs de disponibilité décroissante: "Disponible", "Essaye Moi", "Occupé" et "Hors ligne", et une information d'activité 144 qui peut notamment être un champ libre que l'abonné A remplit ou un menu à choix multiples (éventuellement fonction du statut 142) reflétant ce que l'abonné est en train de faire au moment de l'appel, par exemple.

Dans un mode de réalisation de l'invention, le statut de disponibilité 142 peut être dynamiquement mis à jour en fonction de l'information de géolocalisation: par exemple si l'abonné A rentre à son domicile, son statut 142 passe dynamiquement à "Hors ligne" pour le groupe "TRAVAIL".

En variante, ce statut de disponibilité 142 peut être précisé manuellement par l'abonné concerné pour indiquer s'il souhaite recevoir les appels (le téléphone sonnant alors) ou s'il souhaite rejeter les appels et les renvoyer vers la messagerie vocale. Par exemple, les statuts "Occupé" et "Hors ligne" renvoient directement vers la messagerie vocale, alors que les deux autres statuts laissent le téléphone sonner (moins longtemps pour "Essaye moi") avant de basculer automatiquement sur la messagerie vocale.

Comme décrit dans le document EP 1 330 752 et connu de l'homme de l'art, l'information de statut 142 peut être communiquée, généralement via un serveur central de carnets d'adresses 20 (**figure 1**), aux autres abonnés qui ont enregistrés l'abonné A comme contact dans leur propre carnet d'adresses.

Dans notre exemple, l'abonné A peut ainsi voir que l'abonné B est "disponible".

Outre cette information, chaque contact 200 comprend également les informations que l'abonné A a pu renseigner, par exemple un nom 202, son numéro de téléphone MSISDN 204, la langue de conversation 206 et toute autre information utile (adresse email ou postale). Des mécanismes connus de l'homme de l'art permettent également à l'abonné A de récupérer, pour le contact B, les informations personnelles que ce dernier abonné (B) a renseignées dans le groupe de contacts personnels de son carnet d'adresses auquel est rattaché le contact A.

A noter que les informations de disponibilités 142, 144 transmises aux différents contacts du carnet d'adresses sont celles correspondant uniquement au groupe de contacts auquel appartient ledit contact. Ainsi, l'abonné B verra, dans son propre carnet d'adresses, le contact A comme "occupé", alors que l'abonné C le verra comme "hors ligne" du fait de son rattachement au groupe "FAMILLE".

Dans le cas où par exemple l'abonné B apparaît comme contact dans plusieurs groupe de contacts personnels 110 de l'abonné A, les informations de disponibilités transmises sont celles relatives au groupe de contacts qui présente le statut 142 le plus disponible. Si deux groupes de contacts 110 ont le même statut le plus disponible, le premier listé est choisi.

De retour à la **figure 1**, le serveur 20 comprend une base de données pour mémoriser une copie de chacun des carnets d'adresses 100 des abonnés A, B, C. Par ailleurs, un mécanisme de synchronisation de carnets d'adresses permet au serveur 20 de récupérer en permanence toute modification effectuée par les abonnés sur leurs carnets d'adresses mémorisés localement sur les terminaux 12.

Le système 30 représenté en pointillé et regroupant les serveurs 14, 20 et un serveur de synthèse vocale 22 constitue un système de personnalisation de messages d'indisponibilité selon l'invention. Bien que ce système 30 soit représenté ici sous forme de trois serveurs informatiques distincts, il peut être mis en oeuvre au sein d'un même dispositif, par exemple le serveur 14. Un serveur de synthèse vocale ainsi que les algorithmes de synthèse vocale sont bien connus de l'homme de l'art.

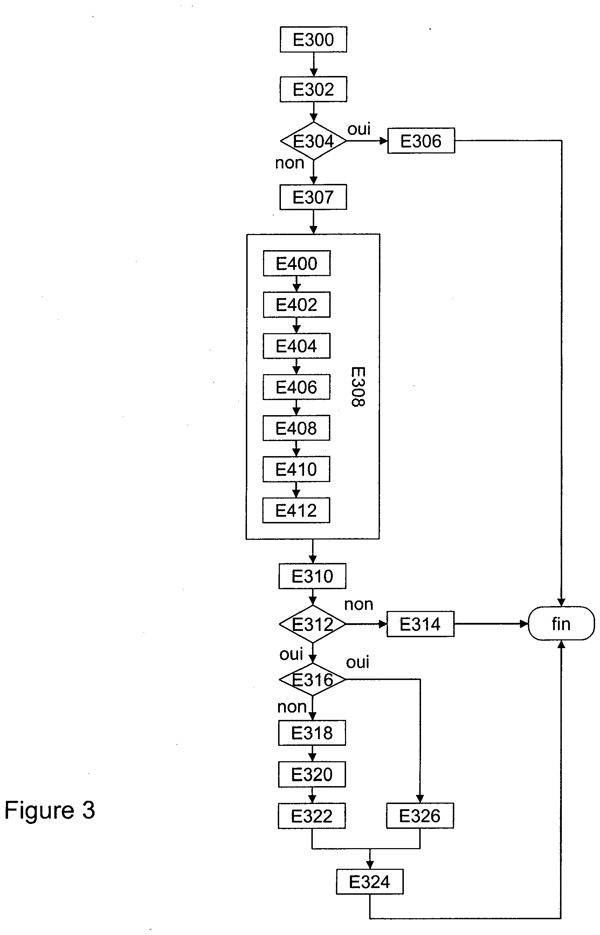

En référence à la **figure 3**, on décrit maintenant des étapes de mise en oeuvre de l'invention.

A l'étape E300, un abonné B veut appeler un abonné A. Pour ce faire, l'abonné B compose, sur son terminal 12 connecté au réseau 10, le numéro de téléphone MSISDN "+33 654321098" de l'abonné A (ou tout autre identifiant d'appel possible propre de celui-ci) ou accède à celui-ci au travers de son carnet d'adresses.

A l'étape E302, l'établissement de cet appel est entrepris par messages de signalisation ISUP ("*ISDN User Part*")*.* On rappelle que l'appel peut ne pas aboutir si le terminal 12 de l'abonné A est éteint ou hors zone de couverture ou si l'abonné A rejette manuellement l'appel.

Par ailleurs, cette signalisation fait intervenir le serveur 20 de carnets d'adresses qui détermine la disponibilité de l'abonné A pour l'abonné appelant B.

Pour ce faire, le serveur 20 récupère, dans les messages de signalisation, les identifiants MSISDN de l'abonné appelant B, noté MSISDNₐₚₚₑₗₐₙₜ, et MSISDN de l'abonné appelé A, noté MSISDN_{appelé}. Il récupère localement le carnet d'adresses de l'abonné A grâce au numéro MSISDN_{appelé}. Puis dans ce carnet d'adresses, il détermine le groupe 110 de contacts personnels qui contient, comme contact, l'abonné B, à l'aide du numéro MSISDNₐₚₚₑₗₐₙₜ. Dans notre exemple, il s'agit du contact B du groupe de contacts "TRAVAIL".

Comme le statut de disponibilité 142 de ce groupe de contacts "TRAVAIL" est mis à "occupé", l'appel n'est pas établi et est redirigé automatiquement vers la messagerie vocale.

A l'étape E304, on détermine si l'établissement de la communication liée à l'appel de l'étape E302 a eu lieu. Dans l'affirmative, une communication classique est réalisée entre les deux abonnés (étape E306).

Dans la négative, l'appel est routé vers la messagerie vocale à l'étape E307 comme dans notre exemple entre les abonnés A et B. Pour ce faire, les messages de signalisation ISUP sont convertis en messages de signalisation SIP vers le serveur 14 (message SIG sur la **figure 1**), qui reçoit ainsi les numéros MSISDNₐₚₚₑₗₐₙₜ et MSISDN_{appelé}.

A l'étape E308, le serveur de messagerie vocale 14 interroge le serveur 20 (requête REQ sur la **figure 1**) au travers d'une interface spécifique pour obtenir un message texte d'indisponibilité personnalisé en fonction d'informations relatives à l'abonné appelé indisponible (réponse REP sur la **figure 1** incluant normalement un message texte MESS.TXT). La requête REQ contient notamment les deux numéros MSISDN de l'abonné appelant B et de l'abonné appelé A.

Cette étape E308 comprend l'envoi (E400) de la requête REQ au serveur 20. Ce dernier interroge alors la base de données pour déterminer si l'abonné A est connu grâce au numéro MSISDN_{appelé} (E402), c'est-à-dire s'il existe un carnet d'adresses 100 qui est associé à l'abonné A. Dans la négative, la réponse REP indique, via un champ nommé "*isbuddy*", que l'abonné A n'est pas connu et le message d'accueil classique de l'abonné A est diffusé à l'abonné B par le serveur de messagerie vocale 14.

Dans l'affirmative, le serveur 20 détermine si MSISDNₐₚₚₑₗₐₙₜ correspond à un contact du carnet d'adresses de l'abonné A (étape E404 - en utilisant l'information 204 des contacts mémorisés). Si tel est le cas, le serveur 20 détermine le groupe 110 de contacts personnels qui contient le contact B (étape E406), ici le groupe "TRAVAIL". Bien entendu, si plusieurs groupes de contacts personnels contiennent le contact B, le "plus disponible" selon le critère du statut de disponibilité 142 est choisi.

Le serveur 20 récupère alors (étape E408), du groupe 110 de contacts personnel ainsi déterminé, une ou plusieurs informations à ajouter au message d'accueil personnalisé.

Ces informations peuvent être prises parmi les informations personnelles 130 et dynamiques 140 de l'abonné A mais également des informations 202, 204, 206 du contact B présent dans ce groupe 110 de contacts personnels déterminé.

Puis, le serveur 20 crée un message texte personnalisé MESS.TXT incluant toute ou partie de ces informations en fonction de règles syntaxiques préétablies (étape E410). Une règle peut par exemple être la formule suivante : "*Désolé*, *je suis* <information 144>" où <information 144> est remplacé dynamiquement par l'information de disponibilité du groupe de contacts déterminé.

De façon simple, seule l'information d'activité 144 est récupérée lors de l'étape E408, de telle sorte qu'un message simple mais personnalisé, type "Désolé, je suis en réunion" est créé sur la base de cette information récupérée. En l'absence d'une telle information d'activité 144 (champ vide), la réponse REP retournée indique, par exemple de façon similaire au cas négatif de l'étape E402, que le message d'accueil classique doit être utilisé.

De façon plus complexe, l'information d'activité 144 ainsi que l'information de géolocalisation et le nom de l'abonné appelé A sont récupérés, de sorte à créer un message ayant plus de signification pour l'abonné appelant B: "Charles Jones est en réunion au laboratoire".

Afin de personnaliser encore plus ce message, le nom 202 du contact appelant B peut également être récupéré de sorte à créer le message suivant: "Désolé Mr. Smith. Charles Jones est actuellement en réunion au laboratoire".

Bien entendu différentes règles de composition des messages textes peuvent être prévues, tenant compte de plus ou moins d'informations présentes dans le carnet d'adresses de l'abonné A. Ces règles peuvent notamment tenir compte de l'absence d'une information et être paramétrés par les abonnés via un accès distant dédié (structure de la phrase du message, informations prises en compte, etc.).

Par ailleurs, dans une version multilingue, l'information de langue 206 du contact B peut être récupérée pour créer un message dans cette langue: "Sorry, I am in a meeting" ou "Sorry Mr. Smith. Charles Jones is in a meeting in the lab".

On voit ici que le message est très personnalisé. Par exemple pour l'abonné C appelant l'abonné A, le message créé pourrait être: "Désolé Petit Coeur, Papa est actuellement en réunion à Versailles", lorsque par exemple, l'abonné C appartient au groupe de contacts "FAMILLE" du carnet d'adresses de l'abonné A.

Une fois le message texte créé, la réponse REP comprenant ce message est retournée au serveur de messagerie vocale 14 à l'étape E412.

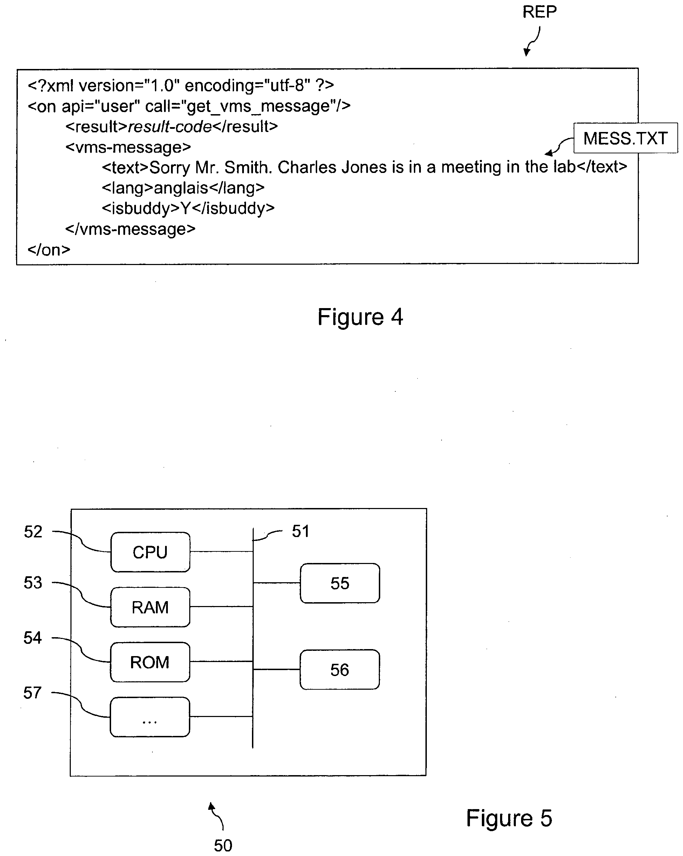

Cette réponse peut par exemple prendre la forme d'un fichier XML dont un exemple est donné en **figure 4**. Sur cet exemple, la fonction mise en oeuvre sur le serveur 20 est nommé "get_vms_message". Elle retourne un premier champ <text> contenant le message MESS.TXT, un deuxième champ <lang> contenant l'information de langue 206 et un troisième champ <isbuddy> prenant la valeur "Y" pour indiquer que l'abonné A a été identifié et le contact B trouvé.

A l'étape E310, le serveur 14 reçoit la réponse REP et détermine tout d'abord si le champ <isbuddy> vaut "Y" (étape E312). Si ce n'est pas le cas, le serveur de messagerie vocale 14 lit le message d'accueil classique, comme mis en oeuvre dans les solutions de l'état de l'art (étape E314).

Si <isbuddy> vaut "Y", alors le message texte MESS.TXT est comparé (étape E316) à un message texte MESS.TXT.OLD mémorisé par le serveur 14 afin de déterminer s'il a subi une modification, par exemple en raison d'une mise à jour de l'information d'activité ou de l'information de géolocalisation dans le groupe 110 de contacts personnels "TRAVAIL" de l'abonné A.

Pour ce faire, le serveur de messagerie vocale 12 mémorise, pour chaque couple MSISDNaₚₚₑₗₐₙₜ-MSISDN_{appelé} le dernier message MESS.TXT reçu. D'autres réalisations peuvent être cependant envisagées pour tenir compte du niveau de précision des informations introduites dans le message. Par exemple, pour un message simple, seul un message MESS.TXT par groupe 110 de contacts personnels peut être mémorisé, auquel cas l'information de groupe de contacts personnels est également indiquée dans la réponse REP (par exemple via un identifiant unique du groupe).

Si la comparaison est négative (texte modifié ou aucun ancien texte mémorisé - sortie non de l'étape E316), une requête REQ2 contenant le texte MESS.TXT et l'information de langue est transmise au serveur de synthèse vocale 22 (étape E318). A cette occasion, le message MESS.TXT vient écraser l'ancien message MESS.TXT.OLD.

A l'étape E320, le serveur de synthèse vocal 22 génère un message vocal MESS.VOC à partir du message texte MESS.TXT. Pour optimiser la qualité de ce message vocal, l'information de langue est également prise en compte afin d'utiliser des intonations de la langue visée. Le message vocal ainsi obtenu peut être un fichier son du type MP3.

Le message vocal MESS.VOC est alors retourné au serveur de messagerie vocale 12 qui le stocke en mémoire, notamment de façon associée au message MESS.TXT.OLD sauvegardé à l'étape E318 (étape E322).

Le message vocal MESS.VOC qui est personnalisé (par opposition au message d'accueil classique) est ensuite lu et diffusé à l'abonné appelant B, comme message d'accueil de la messagerie de l'abonné A (étape E324).

Si la comparaison de l'étape E316 est positive (message texte inchangé), le serveur 14 récupère alors le message vocal MESS.VOC associé, en mémoire, au message texte MESS.TXT.OLD (étape E326) puis le lit à l'abonné B à l'étape E324.

Comme il ressort de cette description, les messages d'accueil lus aux abonnés appelants sont donc fortement personnalisés en fonction de leur relation avec l'abonné appelé et non joint. Cette relation est mise en oeuvre, dans l'invention, au travers des groupes 110 de contacts personnels qui composent les carnets d'adresses de contacts.

En jouant sur les règles de création des messages texte, l'abonné A peut ainsi fournir plus ou moins d'information à certains groupes d'abonnés.

On voit également que par la simple mise à jour des informations 130, 140 associées à ses groupes de contacts, un abonné peut générer, sans gros travail pour lui, un grand nombre de messages d'accueil différents. Ainsi, si l'abonné A change de lieu ou d'activité pour le groupe "TRAVAIL", lorsque l'abonné B appelle à nouveau l'abonné A et tombe sur la messagerie vocale, il entend un nouveau message basé sur ces informations mises à jour.

Dans une variante de l'invention, l'utilisation de messages vocaux personnalisés peut être supprimée au profit de l'envoi de messages SMS personnalisés par le serveur 16. Dans ce cas, le serveur 22 s'avère inutile et l'étape E316 consiste alors à transmettre, au serveur SMS 16, une instruction d'envoi d'un SMS à l'abonné B, cette instruction comprenant le message MESS.TXT (pour le corps du SMS) et le numéro MSISDNₐₚₚₑₗₐₙₜ pour identifier le destinataire du message SMS. Il s'en suit l'envoi du SMS à l'abonné B qui reçoit donc le message d'absence personnalisé sous forme texte.

Par ailleurs, lors de l'étape E308, le numéro MSISDNₐₚₚₑₗₐₙₜ peut être inconnu, soit parce qu'il n'est pas transmis dans les messages de signalisation, soit parce que l'abonné appelant a masqué son numéro de téléphone. Dans ce cas, l'abonné appelant accède alors au message d'accueil classique.

Toutefois, un message tout de même personnalisé peut être prévu et lu à l'abonné appelant. Pour ce faire, la requête REQ ne contient que le numéro MSISDN_{appelé} et le carnet d'adresses de l'abonné A contient un groupe 110 de contacts personnels par défaut, appelé "AUTRES" (ou "EVERYONE ELSE"), qui présente le minimum d'informations personnelles. L'étape E308 consiste alors à récupérer des informations de ce groupe de contacts "AUTRES" et à créer un message texte personnalisé incluant notamment une information de disponibilité 142, 144 associée à ce groupe de contacts.

La **figure 5** montre schématiquement un dispositif 50 pour la mise en oeuvre de l'invention, constituant tout ou partie du système de personnalisation 30.

Le dispositif 50 comprend un bus de communication 51 auquel sont reliés une unité centrale de traitement ou "microprocesseur" 52, une mémoire vive 53, une mémoire morte 54, un dispositif d'affichage 55, un dispositif de pointage 56 et éventuellement d'autres périphériques 57 (interface de communication, lecteur de disquette ou disques, etc.).

La mémoire morte 54 comprend les programmes dont l'exécution permet la mise en oeuvre du procédé de personnalisation selon l'invention, ainsi que les tables ou registres permettant de sauvegarder par exemple les messages MESS.TXT et MESS.VOC associés.

Lors de l'exécution de programmes, le code exécutable de ceux-ci est chargé en mémoire vive 53, type RAM, et exécuté par le microprocesseur 52. Cette exécution permet l'envoi des requêtes REQ et REQ2 ainsi que leur traitement pour générer les messages MESS.TXT et MESS.VOC.

Les dispositifs d'affichage 55 et de pointage 56 permettent à un administrateur de configurer le système, notamment les paramètres de synthèse vocale.

Le dispositif décrit ici et, particulièrement, l'unité centrale 52, sont susceptibles de mettre en oeuvre tout ou partie des traitements décrits en lien avec les **figures 1** à **4**, pour mettre en oeuvre les procédés objets de la présente invention et constituer les systèmes objets de la présente invention.

Les exemples qui précèdent ne sont que des modes de réalisation de l'invention qui ne s'y limite pas.

Bien que l'on a décrit l'invention en lien avec un réseau de téléphonique mobile, l'invention s'applique également à d'autres réseaux, type réseau de téléphonie fixe ou réseau informatique mettant en oeuvre par exemple un service de messagerie électronique ou de messagerie instantanée. De façon connue en soi, un tel service comprend également un carnet de contacts qui peut être utilisé conformément aux enseignements de l'invention pour produire des messages d'absence personnalisés.

## Revendications

1. Procédé de personnalisation d'un message d'indisponibilité d'un utilisateur appelé (A) destiné à être délivré à un utilisateur appelant (B) dans un réseau de communication (10), ledit utilisateur appelé (A) disposant d'au moins un carnet (100) d'adresses organisé selon au moins un groupe (110) de contacts regroupant des contacts personnels (200), **caractérisé en ce que** le procédé comprend les étapes consistant à:
- déterminer (E406) au moins un groupe (110) de contacts dudit utilisateur appelé (A) comprenant un contact correspondant audit utilisateur appelant (B) ;
- déterminer la disponibilité de l'utilisateur appelé à l'aide d'une information de disponibilité (142) dudit utilisateur appelé associée à l'au moins un groupe de contacts déterminé ; et
- en cas de détermination d'une indisponibilité dudit utilisateur appelé :
∘ générer (E410, E320) un message d'indisponibilité (MESS.TXT, MESS.VOC) à partir d'au moins une première information (130, 142, 144, 146) associée, dans le carnet d'adresses, audit au moins un groupe de contacts déterminé ;
∘ mettre ledit message généré à disposition (E316, E324) dudit utilisateur appelant (B).
dans lequel ledit message d'indisponibilité (MESS.TXT, MESS.VOC) tient compte d'une information de nommage (202) propre de l'utilisateur appelant (B), renseignée, dans le carnet d'adresses dudit utilisateur appelé, en association avec un contact (200) correspondant audit utilisateur appelant (B).

2. Procédé selon la revendication 1, dans lequel ledit message généré est un message vocal (MESS.VOC) et l'étape de génération comprend une étape de création (E410) d'un message texte (MESS.TXT) à partir de ladite au moins une première information (142, 144, 146) et une étape de synthèse vocale (E320) dudit message texte en un message vocal (MESS.VOC).

3. Procédé selon la revendication 1, dans lequel on associe à un groupe (110) de contacts personnels, une information de géolocalisation (146) propre dudit utilisateur (A) appelé, et ledit message d'indisponibilité (MESS.TXT, MESS.VOC) est généré à partir de ladite information de géolocalisation.

4. Procédé selon la revendication 3, comprenant une étape de détermination et de mise à jour automatique de ladite information de géolocalisation (146) propre dudit utilisateur appelé (A).

5. Procédé selon la revendication 4, dans lequel, pour un groupe (110) de contacts personnels, ladite première information (142, 144) est choisie parmi un ensemble restreint d'entrées, ces entrées étant fonction de ladite information de géolocalisation (146) déterminée pour ledit groupe (110) de contacts personnels.

6. Procédé selon la revendication 3 ou 4, dans lequel ladite première information tient compte d'au moins une information représentative d'un statut de disponibilité (142) dudit utilisateur appelé (A), ledit statut étant mis à jour automatiquement en fonction de ladite information de géolocalisation déterminée (146).

7. Procédé selon la revendication 1, dans lequel ledit message d'indisponibilité (MESS.TXT, MESS.VOC) tient compte d'une information de nommage (130) propre de l'utilisateur appelé (A), renseignée en association avec ledit groupe (110) de contacts personnels déterminé.

8. Procédé selon la revendication 1, dans lequel, ledit utilisateur appelant (B) étant associé à au moins deux groupes (110) de contacts distincts dans le carnet d'adresses (100) dudit utilisateur appelé (A), ledit message d'indisponibilité (MESS.TXT, MESS.VOC) tient compte d'une première information (142, 144, 146) associée au groupe de contacts, parmi lesdits au moins deux groupes de contacts, disposant d'un statut de disponibilité (142) le plus élevé.

9. Système (30) de personnalisation d'un message d'indisponibilité d'un utilisateur appelé (A) destiné à être délivré à un utilisateur appelant (B) dans un réseau de communication (10), ledit utilisateur (A) appelé (A) disposant d'au moins un carnet d'adresses (100) organisé selon au moins un groupe (110) de contacts regroupant des contacts personnels (200), **caractérisé en ce qu'**il comprend :
- un moyen pour déterminer au moins un groupe de contacts dudit utilisateur appelé comprenant un contact correspondant audit utilisateur appelant ;
- un moyen pour déterminer la disponibilité de l'utilisateur appelé à l'aide d'une information de disponibilité (142) dudit utilisateur appelé associée à l'au moins un groupe de contacts déterminé ;
- un moyen pour générer, en cas d'indisponibilité de l'utilisateur appelé, un message d'indisponibilité (MESS.TXT, MESS.VOC) à partir d'au moins une première information (142, 144, 146) associée, dans le carnet d'adresses, audit au moins un groupe de contact déterminé ; et
- un moyen de mise à disposition dudit message généré auprès dudit utilisateur appelant (B) ;
dans lequel ledit message d'indisponibilité (MESS.TXT, MESS.VOC) tient compte d'une information de nommage (202) propre de l'utilisateur appelant (B), renseignée, dans le carnet d'adresses dudit utilisateur appelé, en association avec un contact (200) correspondant audit utilisateur appelant (B).

10. Système (30) selon la revendication 9, dans lequel le moyen pour générer un message d'indisponibilité comprend un moyen de création d'un message texte (MESS.TXT) sur la base de l'au moins une première information (142, 144, 146) et un serveur de synthèse vocale (22) dudit message texte en un message vocal (MESS.VOC) ; et
ledit moyen de mise à disposition est un serveur de messagerie vocale (14) d'un réseau de téléphonie (10).

11. Système (30) selon la revendication 9, dans lequel le système comprend une base de données (20) stockant les carnets d'adresses (100) de plusieurs utilisateurs (A, B, C) et synchronisée avec des carnets d'adresses détenus localement par lesdits utilisateurs.

12. Moyen de stockage d'informations comprenant des instructions pour un programme informatique adapté à mettre en oeuvre le procédé de gestion conforme à l'une des revendications 1 à 8, lorsque ce programme est chargé et exécuté par le système informatique.

13. Produit programme d'ordinateur lisible par un microprocesseur, comprenant des instructions pour la mise en oeuvre du procédé de gestion conforme à l'une des revendications 1 à 8, lorsque ce programme est chargé et exécuté par le microprocesseur.

## Patentansprüche

1. Verfahren zur Personalisierung einer Nichtverfügbarkeitsnachricht eines angerufenen Benutzers (A), die dazu bestimmt ist, an einen anrufenden Benutzer (B) in einem Kommunikationsnetz (10) geliefert zu werden, wobei der angerufene Benutzer (A) über mindestens ein Adressbuch (100) verfügt, das in mindestens eine Gruppe (110) von Kontakten organisiert ist, die persönliche Kontakte (200) zusammenfasst,
**dadurch gekennzeichnet, dass** das Verfahren die Schritte umfasst bestehend aus:
- Bestimmen (E406) mindestens einer Gruppe (110) von Kontakten des angerufenen Benutzers (A), umfassend einen Kontakt, der dem anrufenden Benutzer (B) entspricht;
- Bestimmen der Verfügbarkeit des angerufenen Benutzers mit Hilfe einer Verfügbarkeitsinformation (142) des angerufenen Benutzers, die mit mindestens einer bestimmten Kontaktgruppe assoziiert ist; und
- im Fall der Bestimmung einer Nichtverfügbarkeit des angerufenen Benutzers:
• Generieren (E410, E320) einer Nichtverfügbarkeitsnachricht (MESS.TXT, MESS.VOC) aus mindestens einer ersten Information (130, 142, 144, 146), die im Adressbuch mit mindestens einer bestimmten Gruppe von Kontakten assoziiert ist;
• Verfügbarmachen (E316, E324) der generierten Nachricht für den anrufenden Benutzer (B);
wobei die Nichtverfügbarkeitsnachricht (MESS.TXT, MESS.VOC) eine Benennungsinformation (202) des anrufenden Benutzers (B) berücksichtigt, die im Adressbuch des angerufenen Benutzers in Assoziation mit einem Kontakt (200), der dem anrufenden Benutzer (B) entspricht, aufgezeichnet ist.

2. Verfahren nach Anspruch 1,
wobei die generierte Nachricht eine Sprachnachricht (MESS.VOC) ist, und der Generierungsschritt einen Schritt der Erzeugung (E410) einer Textnachricht (MESS.TXT) aus der mindestens einen ersten Information (142, 144, 146) und einen Schritt der Sprachsynthese (E320) der Textnachricht in eine Sprachnachricht (MESS.VOC) umfasst.

3. Verfahren nach Anspruch 1,
wobei mit einer Gruppe (110) von persönlichen Kontakten eine Geolokalisierungsinformation (146) des angerufenen Benutzers (A) assoziiert wird, und die Nichtverfügbarkeitsnachricht (MESS.TXT, MESS.VOC) aus der Geolokalisierungsinformation generiert wird.

4. Verfahren nach Anspruch 3,
umfassend einen Schritt der Bestimmung und der automatischen Aktualisierung der Geolokalisierungsinformation (146) des angerufenen Benutzers (A).

5. Verfahren nach Anspruch 4,
wobei für eine Gruppe (110) von persönlichen Kontakten die erste Information (142, 144) aus einer begrenzten Einheit von Einträgen ausgewählt wird, wobei diese Einträge von der Geolokalisierungsinformation (146) abhängig sind, die für die Gruppe (110) von persönlichen Kontakten bestimmt wird.

6. Verfahren nach Anspruch 3 oder 4,
wobei die erste Information mindestens eine Information berücksichtigt, die für einen Verfügbarkeitsstatus (142) des angerufenen Benutzers (A) repräsentativ ist, wobei der Status automatisch in Abhängigkeit von der bestimmten Geolokalisierungsinformation (146) aktualisiert wird.

7. Verfahren nach Anspruch 1,
wobei die Nichtverfügbarkeitsnachricht (MESS.TXT, MESS.VOC) eine Benennungsinformation (130) des angerufenen Benutzers (A) berücksichtigt, die in Assoziation mit der bestimmten Gruppe (110) von persönlichen Kontakten aufgezeichnet ist.

8. Verfahren nach Anspruch 1,
wobei, wenn der anrufende Benutzer (B) mit mindestens zwei unterschiedlichen Gruppen (110) von Kontakten im Adressbuch (100) des angerufenen Benutzers (A) assoziiert ist, die Nichtverfügbarkeitsnachricht (MESS.TXT, MESS.VOC) eine erste Information (142, 144, 146) berücksichtigt, welche mit der Gruppe von Kontakten unter den mindestens zwei Gruppen von Kontakten assoziiert ist, die über den höchsten Verfügbarkeitsstatus (142) verfügt.

9. System (30) zur Personalisierung einer Nichtverfügbarkeitsnachricht eines angerufenen Benutzers (A), die dazu bestimmt ist, an einen anrufenden Benutzer (B) in einem Kommunikationsnetz (10) geliefert zu werden, wobei der angerufene Benutzer (A) über mindestens ein Adressbuch (100) verfügt, das in mindestens eine Gruppe (110) von Kontakten organisiert ist, die persönliche Kontakte (200) zusammenfasst, **dadurch gekennzeichnet, dass** dieses umfasst:
- ein Mittel zum Bestimmen mindestens einer Gruppe von Kontakten des angerufenen Benutzers, umfassend einen Kontakt, der dem anrufenden Benutzer entspricht;
- ein Mittel zum Bestimmen der Verfügbarkeit des angerufenen Benutzers mit Hilfe einer Verfügbarkeitsinformation (142) des angerufenen Benutzers, die mit mindestens einer bestimmten Kontaktgruppe assoziiert ist; und
- ein Mittel zum Generieren, im Fall der Nichtverfügbarkeit des angerufenen Benutzers, einer Nichtverfügbarkeitsnachricht (MESS.TXT, MESS.VOC) aus mindestens einer ersten Information (142, 144, 146), die im Adressbuch mit mindestens einer bestimmten Gruppe von Kontakten assoziiert ist; und
- ein Mittel zum Verfügbarmachen der generierten Nachricht für den anrufenden Benutzer (B); wobei die Nichtverfügbarkeitsnachricht (MESS.TXT, MESS.VOC) eine Benennungsinformation (202) des anrufenden Benutzers (B) berücksichtigt, die im Adressbuch des angerufenen Benutzers in Assoziation mit einem Kontakt (200), der dem anrufenden Benutzer (B) entspricht, aufgezeichnet ist.

10. System (30) nach Anspruch 9,
wobei das Mittel zum Generieren einer Nichtverfügbarkeitsnachricht ein Mittel zum Erzeugen einer Textnachricht (MESS.TXT) auf der Basis mindestens einer ersten Information (142, 144, 146) und einen Server (22) zur Sprachsynthese der Textnachricht in eine Sprachnachricht (MESS.VOC) umfasst; und
wobei das Mittel zum Verfügbarmachen ein Server zur Sprachnachrichtenübermittlung (14) eines Telefonnetzes (10) ist.

11. System (30) nach Anspruch 9,
wobei das System eine Datenbank (20) umfasst, die Adressbücher (100) mehrerer Benutzer (A, B, C) speichert und mit Adressbüchern synchronisiert ist, die lokal von den Benutzern gehalten werden.

12. Informationsspeichermedium, umfassend Instruktionen für ein Computerprogramm, das geeignet ist, das Steuerverfahren nach einem der Ansprüche 1 bis 8 durchzuführen, wenn das Programm geladen und von dem Computersystem ausgeführt wird.

13. Computerprogrammprodukt, welches von einem Mikroprozessor gelesen werden kann, umfassend Instruktionen zur Durchführung des Steuerverfahrens nach einem der Ansprüche 1 bis 8, wenn das Programm geladen und von dem Computersystem ausgeführt wird.

## Claims

1. Method for personalizing an unavailability message of a called user (A) intended to be delivered to a calling user (B) in a communication network (10), said called user (A) having at least one address book (100) organized according to at least one group (110) of contacts grouping together personal contacts (200), **characterized in that** the method comprises the steps consisting in:
- determining (E406) at least one group (110) of contacts of said called user (A) comprising a contact corresponding to said calling user (B);
- determining the availability of the called user with the aid of an item of information in respect of availability (142) of said called user and associated with the at least one determined group of contacts; and
- in case of determination of an unavailability of said called user:
∘ generating (E410, E320) an unavailability message (MESS.TXT, MESS.VOC) on the basis of at least one first item of information (130, 142, 144, 146) associated, in the address book, with said at least one determined group of contacts;
∘ placing said generated message at the disposal (E316, E324) of said calling user (B)
in which said unavailability message (MESS.TXT, MESS.VOC) takes account of a naming item of information (202) specific to the calling user (B) and advised, in the address book of said called user, in association with a contact (200) corresponding to said calling user (B).

2. Method according to Claim 1, in which said generated message is a voice message (MESS.VOC) and the generating step comprises a step (E410) of creating a text message (MESS.TXT) on the basis of said at least one first item of information (142, 144, 146) and a step of voice synthesis (E320) of said text message into a voice message (MESS.VOC).

3. Method according to Claim 1, in which a geolocation item of information (146) specific to said called user (A) is associated with a group (110) of personal contacts, and said unavailability message (MESS.TXT, MESS.VOC) is generated on the basis of said geolocation item of information.

4. Method according to Claim 3, comprising a step of determining and automatically updating said geolocation item of information (146) specific to said called user (A).

5. Method according to Claim 4, in which, for a group (110) of personal contacts, said first item of information (142, 144) is chosen from among a restricted set of inputs, these inputs being dependent on said geolocation item of information (146) determined for said group (110) of personal contacts.

6. Method according to Claim 3 or 4, in which said first item of information takes account of at least one item of information representative of an availability status (142) of said called user (A), said status being updated automatically as a function of said determined geolocation item of information (146).

7. Method according to Claim 1, in which said unavailability message (MESS.TXT, MESS.VOC) takes account of a naming item of information (130) specific to the called user (A) and advised in association with said determined group (110) of personal contacts.

8. Method according to Claim 1, in which, said calling user (B) being associated with at least two distinct groups (110) of contacts in the address book (100) of said called user (A), said unavailability message (MESS.TXT, MESS.VOC) takes account of a first item of information (142, 144, 146) associated with the group of contacts, from among said at least two groups of contacts, having the highest availability status (142).

9. System (30) for personalizing an unavailability message of a called user (A) intended to be delivered to a calling user (B) in a communication network (10), said user (A) called (A) having at least one address book (100) organized according to at least one group (110) of contacts grouping together personal contacts (200), **characterized in that** it comprises:
- a means for determining at least one group of contacts of said called user comprising a contact corresponding to said calling user;
- a means for determining the availability of the called user with the aid of an item of information in respect of availability (142) of said called user and associated with the at least one determined group of contacts;
- a means for generating, in case of unavailability of the called user, an unavailability message (MESS.TXT, MESS.VOC) on the basis of at least one first item of information (142, 144, 146) associated, in the address book, with said at least one determined contact group; and
- a means of placing said generated message at the disposal of said calling user (B);
in which said unavailability message (MESS.TXT, MESS.VOC) takes account of a naming item of information (202) specific to the calling user (B) and advised, in the address book of said called user, in association with a contact (200) corresponding to said calling user (B).

10. System (30) according to Claim 9, in which the means for generating an unavailability message comprises a means for creating a text message (MESS.TXT) on the basis of the at least one first item of information (142, 144, 146) and a server for voice synthesis (22) of said text message into a voice message (MESS.VOC); and
said means for placing at disposal is a voice messaging server (14) of a telephone network (10).

11. System (30) according to Claim 9, in which the system comprises a database (20) which stores the address books (100) of several users (A, B, C) and is synchronized with address books held locally by said users.

12. Means for storing information comprising instructions for a computing program suitable for implementing the management method in accordance with one of Claims 1 to 8, when this program is loaded and executed by the computing system.

13. Computer program product readable by a microprocessor, comprising instructions for the implementation of the management method in accordance with one of Claims 1 to 8, when this program is loaded and executed by the microprocessor.
